(19) Europäisches Patentamt
European Patent Office
Office européen des brevets

(11) **EP 3 995 396 A1**

(12) **EUROPEAN PATENT APPLICATION**
published in accordance with Art. 153(4) EPC

(43) Date of publication:
**11.05.2022 Bulletin 2022/19**

(21) Application number: **20836110.5**

(22) Date of filing: **07.05.2020**

(51) International Patent Classification (IPC):
**B64C 39/02** $^{(2006.01)}$   **B64D 47/08** $^{(2006.01)}$
**G08G 5/04** $^{(2006.01)}$

(52) Cooperative Patent Classification (CPC):
**B64C 39/02; B64D 47/08; G08G 5/04**

(86) International application number:
**PCT/JP2020/018552**

(87) International publication number:
**WO 2021/005876 (14.01.2021 Gazette 2021/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2019 JP 2019126219**

(71) Applicant: **Sony Group Corporation
Tokyo 108-0075 (JP)**

(72) Inventor: **OKAMORI, Atsushi
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, PROGRAM, AND INFORMATION PROCESSING SYSTEM**

(57)     An information processing apparatus according to the present technology includes a control unit. The control unit calculates a relative position of a second moving body with respect to a first moving body based on a captured image of the second moving body captured by the first moving body and position information of the first moving body, and calculates a movable area of the second moving body based on the relative position.

FIG.10

**Description**

Technical Field

The present technology relates to an information processing apparatus, an information processing method, a program, and an information processing system.

Background Art

In recent years, it has been proposed to utilize a system composed of a plurality of moving bodies, for example, in the case of taking aerial photographs of scenery or the like, or in the case of remote patrol security, or the like. In such a system, a technique for avoiding collision between moving bodies is employed (see, for example, Patent Literatures 1 and 2).

Citation List

Patent Literature

Patent Literature 1: Japanese Patent Application Laid-open No. 2012-131484
Patent Literature 2: Japanese Patent Application Laid-open No. 2007-034714

Disclosure of Invention

Technical Problem

In a system composed of a plurality of moving bodies, it is not known how one moving body moves with respect to the other moving body, or it is difficult to grasp a moving speed, a moving direction, and the like of the other moving body, so that sufficient accuracy in avoiding collision between the moving bodies may not be obtained.
Therefore, the present technology proposes an information processing apparatus, an information processing method, a program, and an information processing system capable of improving the accuracy of avoiding the collision between the moving bodies.

Solution to Problem

In order to solve the above problems, an information processing apparatus according to an embodiment of the present technology includes a control unit.
The control unit calculates a relative position of a second moving body with respect to a first moving body based on a captured image of the second moving body captured by the first moving body and position information of the first moving body, and calculates a movable area of the second moving body based on the relative position.
The control unit may specify identification information for identifying the second moving body by performing image processing on the captured image.
The control unit may estimate a distance between the second moving body and the first moving body, and calculate position information of the second moving body from the estimated distance, the position information of the first moving body, and a relative direction of the second moving body with respect to the first moving body.
The control unit may calculate a movable area of the second moving body based on the position information of the second moving body and an airframe performance of the second moving body associated with the identification information.
The control unit may calculate the movable area of the second moving body based on at least one of a maximum speed, a maximum ascending speed, a maximum descending speed, a maximum acceleration, maximum ascending acceleration, or maximum descending acceleration of the second moving body associated with the identification information, and the position information of the second moving body.
The control unit may output a calculation result of the movable area to the first moving body, and the first moving body may generate a moving route of the first moving body that does not cross the movable area.
The control unit may newly calculate the movable area of the second moving body based on the position information of the second moving body after a certain period of time is elapsed from the generation of the moving route of the first moving body.

The control unit may output a calculation result obtained by newly calculating the movable area of the second moving body to the first moving body, and
the first moving body may newly generates a moving route of the first moving body that does not cross the newly calculated movable area.

At least one of the first moving body or the second moving body may be a flight body.

The information processing apparatus may be a server.

In order to solve the above problems, an information processing apparatus according to an embodiment of the present technology calculates a relative position of a moving body with respect to the information processing apparatus based on a captured image of the moving body captured by the information processing apparatus and position information of the information processing apparatus, and calculates a movable area of the moving body based on the relative position.

The information processing apparatus may be a moving body or a flight body.

In order to solve the above problems, an information processing method by an information processing apparatus according to an embodiment of the present technology, including:

calculating a relative position of a second moving body with respect to a first moving body based on a captured image of the second moving body captured by the first moving body and position information of the first moving body; and
calculating a movable area of the second moving body based on the relative position.

In order to solve the above problems, a program according to an embodiment of the present technology causes an information processing apparatus to execute the steps of:

calculating a relative position of a second moving body with respect to a first moving body based on a captured image of the second moving body captured by the first moving body and position information of the first moving body; and
calculating a movable area of the second moving body based on the relative position.

In order to solve the above problems, an information processing system according to an embodiment of the present technology includes an information processing apparatus and a first moving body.

The information processing apparatus calculates a relative position of a second moving body with respect to a first moving body based on a captured image of the second moving body captured by the first moving body and position information of the first moving body, calculates a movable area of the second moving body based on the relative position, and outputs a calculation result of the movable area to the first moving body.

The first moving body generates a moving route of the first moving body that does not cross the movable area.

Brief Description of Drawings

[Fig. 1] Fig. 1 is a diagram showing together a drone airframe and other airframe.
[Fig. 2] Fig. 2 is a schematic diagram showing a configuration example of an information processing system according to a first embodiment of the present technology.
[Fig. 3] Fig. 3 is a block diagram showing a configuration example of the information processing system.
[Fig. 4] Fig. 4 is an example of a data table in which a model number and an airframe performance of the drone airframe are associated with each other.
[Fig. 5] Fig. 5 is a block diagram showing an example of a hardware configuration of the drone airframe and the information processing apparatus.
[Fig. 6] Fig. 6 is a flowchart showing a typical operation flow of the information processing system.
[Fig. 7] Fig. 7 is a schematic diagram schematically showing an optical system of a camera and an image capture element.
[Fig. 8] Fig. 8 is a diagram showing the drone airframe and the other airframe together.
[Fig. 9] Fig. 9 is conceptual diagrams each showing a maximum moving range in a horizontal direction and in a vertical plane direction of the other airframe.
[Fig. 10] Fig. 10 is a diagram showing a situation in which the drone airframe flies so as not to cross the maximum movable area of the other airframe.
[Fig. 11] Fig. 11 is a diagram showing the drone airframe and the other airframe together.
[Fig. 12] Fig. 12 is a diagram showing the drone airframe and the other airframe together.
[Fig. 13] Fig. 13 is a block diagram showing a configuration example of the drone airframe according to a second embodiment of the present technology.
[Fig. 14] Fig. 14 is a flowchart showing a typical operation of the drone airframe.

Mode(s) for Carrying Out the Invention

Hereinafter, embodiments of the present technology will be described with reference to the drawings.

<First embodiment>

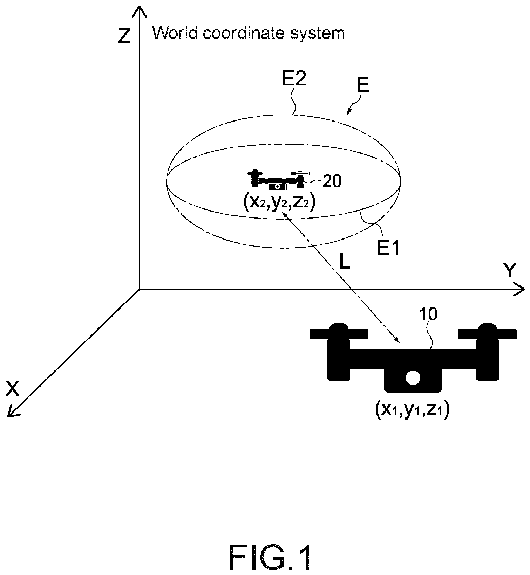

Fig. 1 is a diagram showing together a drone airframe 10 and other airframe 20 that is a drone airframe different from the drone airframe 10. The other airframe 20 is an example of a "second moving body" in the claims.
In the following embodiments, when collision between the drone airframe 10 and the other airframe 20 is avoided, an embodiment will be described in which the drone airframe 10 avoids the collision with the other airframe 20. Incidentally, X, Y and Z-axis directions shown in Fig. 1 are three-axis directions perpendicular to each other, and it is also common in the following drawings.

[Configuration of information processing system]

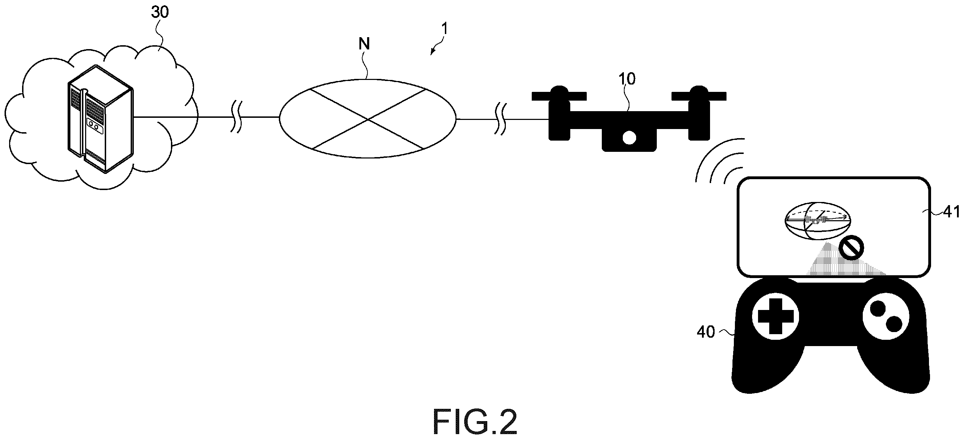

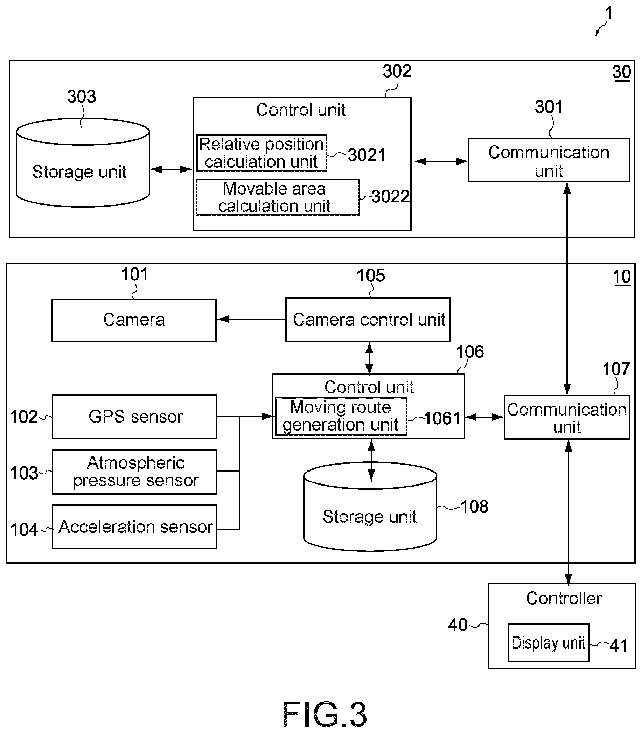

Fig. 2 is a schematic diagram showing a configuration example of an information processing system 1 according to a first embodiment, and Fig. 3 is a block diagram showing a configuration example of the information processing system 1. The information processing system 1 includes the drone airframe 10, an information processing apparatus 30, and a controller 40, as shown in Fig. 2.
The drone airframe 10 and the information processing apparatus 30 are connected to each other via a network N so as to be able to communicate with each other. The network N may be the Internet, a mobile communication network, a local area network, or the like, and may be a network in which a plurality of types of networks are combined.
The drone airframe 10 and the controller 40 are connected by wireless communication. The communication standard for connecting the drone airframe 10 and the controller 40 is typically LTE (Long Term Evolution) communication, but is not limited thereto, and the type of the communication standard is not limited to Wi-Fi or the like.

(Drone airframe)

The drone airframe 10 includes a camera 101, a GPS sensor 102, an atmospheric pressure sensor 103, an acceleration sensor 104, a camera control unit 105, a control unit 106, a communication unit 107, and a storage unit 108, as shown in Fig. 3. The drone airframe 10 is an example of a "first moving body" in the claims.
The camera 101 is an apparatus for generating a captured image by capturing a real space using, for example, an image capture element such as a CMOS (Complementary Metal Oxide Semiconductor or a CCD (Charge Coupled Device), and various members such as a lens for controlling imaging of a subject image to the image capture element. The camera 101 may capture a still image or may capture a moving image.
The GPS sensor 102 receives a signal from a GPS satellite and measures a current latitude and a longitude of the drone airframe 10. The GPS sensor 102 outputs sensor data relating to the latitude and the longitude of the drone airframe 10, which is calculated based on the signal acquired from the GPS satellite, to a relative position calculation unit 3021.
The atmospheric pressure sensor 103 is a pressure sensor that measures an atmospheric pressure and converts it to an altitude to measure a flight altitude (atmospheric pressure altitude) of the drone airframe 10. The atmospheric pressure sensor 103 detects a total pressure including an influence of wind received by the drone airframe 10 and the atmospheric pressure received by the drone airframe 10, and measures a flight speed (airspeed) of the drone airframe 10 based on a difference therebetween.
The atmospheric pressure sensor 103 outputs sensor data obtained by measuring the flight altitude and the flight speed of the drone airframe 10 to the relative position calculation unit 3021. The atmospheric pressure sensor 103 may be, for example, a piezoresistive pressure sensor, and the type thereof is not limited.
The acceleration sensor 104 detects acceleration of the drone airframe 10. The acceleration sensor 104 detects various movements such as a tilt and vibration of the drone airframe 10. The acceleration sensor 104 outputs sensor data obtained by detecting the acceleration of the drone airframe 10 to the relative position calculation unit 3021.
The acceleration sensor 104 may be, for example, a piezoelectric acceleration sensor, a servo-type acceleration sensor, a strain-type acceleration sensor, a semiconductor-type acceleration sensor or the like, and the type thereof is not limited.
The camera control unit 105 generates a control signal for changing a photographing direction, a posture and a photographing magnification of the camera 101 based on the control of the control unit 106, and outputs the signal to the camera 101 and the control unit 302.

The camera control unit 105 controls a movement of the camera 101 in pan and tilt directions through a cloud table (not shown) in which a motor such as a 3-axis gimbal is built-in, for example, and outputs a control signal relating to the current posture of the camera 101 (e.g., pan angle and tilt angle) and the photographing magnification to the relative position calculation unit 3021.

The control unit 106 controls an entire operation of the drone airframe 10 or a part thereof in accordance with a program stored in the storage unit 108. The control unit 106 functionally includes a moving route generation unit 1061.

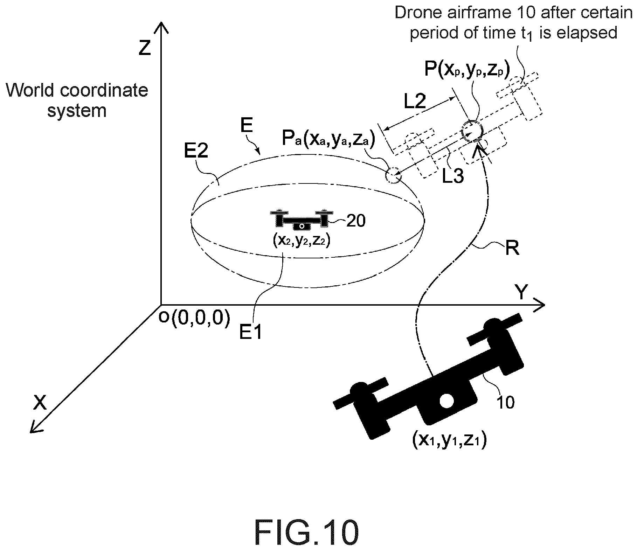

The moving route generation unit 1061 sets a waypoint P, which is a halfway target point of the drone airframe 10, based on a maximum movable area E of the other airframe 20, and generates a moving route R of the drone airframe 10 via the set waypoint P (see Fig. 10). The maximum movable area E is an example of a "movable area" in the claims.

The communication unit 107 communicates with the information processing apparatus 30 through the network N. The communication unit 107 functions as a communication interface of the drone airframe 10.

The storage unit 108 stores sensor data output from the GPS sensor 102, the atmospheric pressure sensor 103, and the acceleration sensor 104, and a control signal output from the camera control unit 105.

(Information processing apparatus)

As shown in Fig. 3, the information processing apparatus 30 includes a communication unit 301, a control unit 302, and a storage unit 303. The information processing apparatus 30 is typically a cloud server, but is not limited thereto, and may be any other computer such as a PC.

Alternatively, the information processing apparatus 30 may be a traffic control apparatus that gives an instruction to the drone airframe 10 and executes a guide flight control.

The communication unit 301 communicates with the drone airframe 10 via the network N. The communication unit 301 functions as a communication interface of the information processing apparatus 30.

The control unit 302 controls an entire operation of the information processing apparatus 30 or a part thereof in accordance with a program stored in the storage unit 303. The control unit 302 corresponds to a "control unit" in the claims.

The control unit 302 functionally includes the relative position calculation unit 3021 and a movable area calculation unit 3022.

The relative position calculation unit 3021 calculates a current position (position information) of the drone airframe 10 from the sensor data acquired from the GPS sensor 102 and the atmospheric pressure sensor 103. The relative position calculation unit 3021 calculates the relative position of the other airframe 20 with respect to the drone airframe 10 based on the captured image acquired from the camera 101, a control signal relating to a current posture of the camera 101 acquired from the camera control unit 105, and the current position of the drone airframe 10.

The movable area calculation unit 3022 calculates the maximum movable area E of the other airframe 20 based on the relative position and an airframe performance of the other airframe 20.

The storage unit 303 stores data in which a model name, a model number, and the airframe performance of each of a plurality of drone airframes are associated with each other. The model name or the model number is an example of "identification information" in the claims.

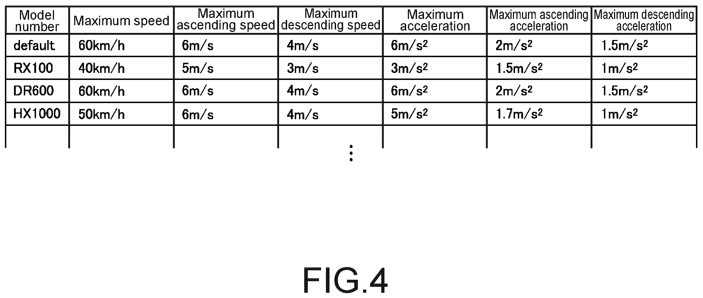

The storage unit 303 stores a set interval (hereinafter, certain period of time $t_1$) of the waypoint P and a local feature amount of each of the plurality of drone airframes. Fig. 4 is an example of a data table in which the model number and the airframe performance of the drone airframe are associated with each other. It should be appreciated that specific numerical values shown in Fig. 4 is merely an example, and is not limited to the numerical values.

(Controller)

The controller 40 is a steering apparatus for steering the drone airframe 10, and has a display unit 41. The display unit 41 is, for example, a display apparatus such as an LCD or an organic EL display.

The display unit 41 displays a picture photographed by the camera 101. As a result, the user can operate the drone airframe 10 while watching the picture displayed on the display unit 41.

(Hardware configuration)

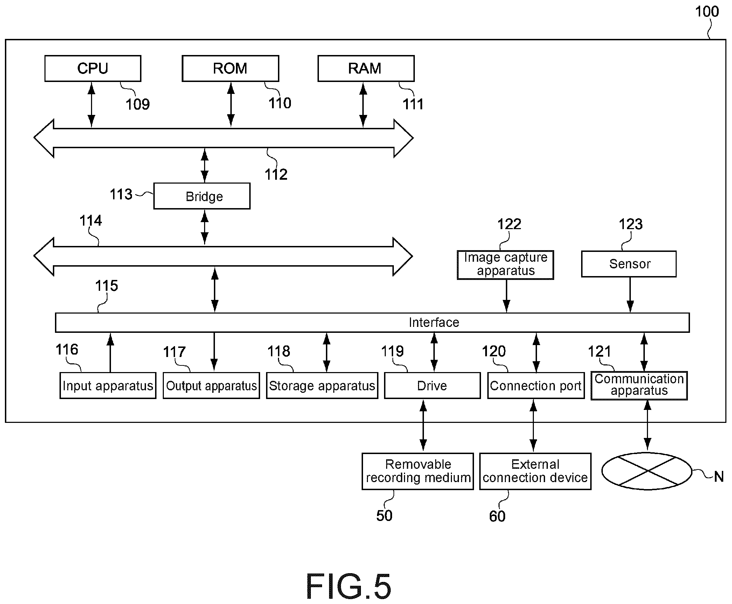

Fig. 5 is a block diagram showing an example of a hardware configuration of the drone airframe 10 and the information processing apparatus 30. The drone airframe 10 and the information processing apparatus 30 may be the information processing apparatus 100 shown in Fig. 5.

The information processing apparatus 100 includes a CPU (Central Processing unit) 109, a ROM (Read Only Memory) 110, and a RAM (Random Access Memory) 111. The control units 106 and 302 may be the CPU 109.

The information processing apparatus 100 may include a host bus 112, a bridge 113, an external bus 114, an interface 115, an input apparatus 116, an output apparatus 117, a storage apparatus 118, a drive 119, a connection port 120, and a communication apparatus 121.

In addition, the information processing apparatus 100 may include an image capture apparatus 122 and a sensor 123, as necessary. Furthermore, the information processing apparatus 100 may include a processing circuit such as a DSP (Digital Signal Processor), an ASIC (Application Specific Integrated Circuit), an FPGA (Field-Programmable Gate Array) or a GPU (Graphics Processing Unit) instead of or in addition to the CPU 109.

The CPU 109 functions as an arithmetic processing unit and a control unit, and controls an entire operation of the information processing apparatus 100 or a part thereof in accordance with various programs recorded on the ROM 110, the RAM 111, the storage apparatus 118, or a removable recording medium 50. Each of the storage units 108 and 303 may be the ROM 110, the RAM 111, the storage apparatus 118, or the removable recording medium 50.

The ROM 110 stores programs and arithmetic parameters used by the CPU 109. The RAM 111 primarily stores a program used in executing the CPU 109, parameters that change accordingly in executing the program, and the like.

The CPU 109, the ROM 110, and the RAM 111 are connected to each other by the host bus 112 including an internal bus such as a CPU bus. In addition, the host bus 112 is connected via the bridge 113 to the external bus 114 such as a PCI (Peripheral Component Interconnect/Interface) bus.

The input apparatus 116 is an apparatus operated by the user such as a mouse, a keyboard, a touch panel, a button, a switch, and a lever. The input apparatus 116 may be, for example, a remote control apparatus using infrared rays or other radio waves, or may be an externally connection device 60 such as a mobile phone corresponding to the operation of the information processing apparatus 100.

The input apparatus 116 includes an input control circuit that generates an input signal based on information input by the user, and outputs the generated signal to the CPU 109. By operating the input apparatus 116, the user inputs various data to the information processing apparatus 100 or instructs a processing operation.

The output apparatus 117 includes an apparatus capable of notifying the user of the acquired information using a sense of vision, hearing, tactile sense, or the like. The output apparatus 117 may be, for example, a display apparatus such as an LCD (Liquid Crystal Display) or an organic EL (Electro-Luminescence) display, an audio output apparatus such as a speaker or headphone, or a vibrator.

The output apparatus 117 outputs a result acquired by the processing of the information processing apparatus 100 as a picture such as a text and an image, a sound such as voice and audio, vibration, or the like.

The storage apparatus 118 is a data storage apparatus configured as an example of the storage unit of the information processing apparatus 100. The storage apparatus 118 includes, for example, a magnetic storage device such as a Hard Disk Drive, a semiconductor storage device, an optical storage device, a magneto-optical storage device, or the like. The storage apparatus 118 stores, for example, a program executed by the CPU 109, various data, and various data externally acquired.

The drive 119 is a reader/writer for the removable recording medium 50 such as a magnetic disk, an optical disk, a magneto-optical disk, or a semiconductor memory, and is built in or externally attached to the information processing apparatus 100. The drive 119 reads out the information recorded in the mounted removable recording medium 50 and outputs the information to the RAM 111. Moreover, the drive 119 writes a record in the mounted removable recording medium 50.

The connection port 120 is a port for connecting the device to the information processing apparatus 100. The connection port 120 may be, for example, a USB (Universal Serial Bus) port, an IEEE1394 port, an SCSI (Small Computer System Interface) port, or the like.

Furthermore, the connection port 120 may be an RS-232C port, an optical audio terminal, an HDMI (registered trademark) (High-Definition Multimedia Interface) port, or the like. By connecting the external connection device 60 to the connection port 120, various data can be exchanged between the information processing apparatus 100 and the external connection device 60.

The communication apparatus 121 is, for example, a communication interface including a communication apparatus for connecting to the network N. The communication apparatus 121 may be, for example, a communication card for the LAN (Local Area Network), the Bluetooth (registered trademark), the Wi-Fi, a WUSB (Wireless USB) or the LTE (Long Term Evolution). In addition, the communication apparatus 121 may be a router for optical communication, a router for ADSL (Asymmetric Digital Subscriber Line), or a modem for various types of communications.

The communication apparatus 121 transmits and receives a signal and the like to and from the Internet or other communication apparatus using a predetermined protocol such as TCP/IP. The network N connected to the communication apparatus 121 is a network connected by radio, and may include, for example, the Internet, infrared communication, radio wave communication, short-range radio communication, satellite communication, or the like. Each of the communication units 107 and 301 may be the communication apparatus 121.

The imaging capture apparatus 122 captures the real space and generates a captured image. The camera 101 corresponds to the image capture apparatus 122.

The sensor 123 may be, for example, various sensors such as an acceleration sensor, an angular velocity sensor, a geomagnetic sensor, an illuminance sensor, a thermal sensor, an air pressure sensor, and a sound sensor (microphone).

The sensor 123 acquires information about a state of the information processing apparatus 100 itself, for example, the posture of a housing of the information processing apparatus 100, and information about a peripheral environment of the information processing apparatus 100 such as brightness and a noise around the information processing apparatus 100. Moreover, the sensor 123 may also include a GPS receiver that receives a global positioning system (GPS) signal to measure the latitude, the longitude, and the altitude of the apparatus. The GPS sensor 102, the atmospheric pressure sensor 103, and the acceleration sensor 104 correspond to the sensor 123.

The configuration example of the information processing system 1 is described above. The respective components described above may be configured by using general-purpose members or may be configured by members and materials specialized for functions of the respective components. Such a configuration may be changed as appropriate in a manner that depends on a technical level at the time of implementation.

[Operation of information processing system]

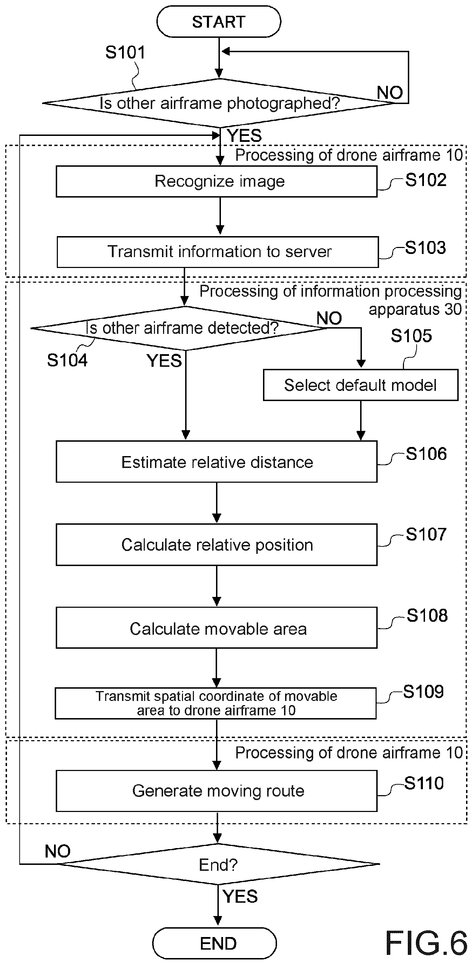

Fig. 6 is a flowchart showing a typical operation flow of the information processing system 1. Hereinafter, the operation of the information processing system 1 will be described with reference to Fig. 6, as appropriate.

First, the camera 101 mounted on the drone airframe 10 captures the real space (hereinafter, three-dimensional space) in which the other airframe 20 exists. At this time, when the other airframe 20 is within a photographing range of the camera 101 (YES in Step S101), the camera 101 enlarges a magnification until the other airframe 20 fills the screen.

Thus, the photographing range (field of view size) of the camera 101 is substantially equal to a size of the other airframe 20. The camera 101 captures the other airframe 20 in a state in which the photographing range and the size of the other airframe 20 are substantially equal (Step S102), and outputs the captured image to the relative position calculation unit 3021.

The camera control unit 105 generates a control signal for changing the photographing direction, the posture, and the photographing magnification of the camera 101 based on the control of the control unit 106, and outputs the signal to the camera 101 and the control unit 302 (relative position calculation unit 3021) (Step S103).

The camera control unit 105 controls the movement of the camera 101 in the pan and tilt directions through the cloud table (not shown) in which a motor such as a 3-axis gimbal is built-in, for example, and outputs a control signal relating to the present posture (e.g., pan angle and tilt angle) and the photographing magnification of the camera 101 to the relative position calculation unit 3021 (Step S103) .

The GPS sensor 102 outputs the sensor data relating to the latitude and the longitude of the drone airframe 10, which is calculated based on the signal acquired from the GPS satellite, to the relative position calculation unit 3021 (Step S103).

The acceleration sensor 104 outputs the sensor data obtained by detecting the acceleration of the drone airframe 10 to the relative position calculation unit 3021. The atmospheric pressure sensor 103 outputs the sensor data obtained by measuring the flight altitude and the flight speed of the drone airframe 10 to the relative position calculation unit 3021 (Step S103).

Next, the relative position calculation unit 3021 performs predetermined image processing on the captured image acquired from the camera 101 to specify the model name or the model number of the other airframe 20 (YES in Step S104). Specifically, the relative position calculation unit 3021 extracts a local feature quantity of a 3D shape of the other airframe 20 from the captured image in which the other airframe 20 is captured.

The local feature amount is a feature amount calculated by, for example, a SIFT (scale invariant feature transform), a SURF (speed-up robust features), a RIFF (rotation invariant fast feature), a BREIF (binary robust independent elementary features), a BRISK (binary robust invariant scalable keypoints), an ORB (oriented FAST and rotated BRIEF), a CARD (compact and real-time descriptors), or the like.

The relative position calculation unit 3021 detects the other airframe 20 by a feature quantity matching that compares the local feature quantity of the 3D shape of the other airframe 20 with the local feature quantity of each of the plurality of drone airframes stored in advance in the storage unit 303, and specifies the model name or the model number of the other airframe 20.

On the other hand, when the model name or the model number of the other airframe 20 could not be specified from the 3D shape of the other airframe 20 (NO in Step S104), the relative position calculation unit 3021 refers to the airframe performance (maximum speed, maximum ascending speed, maximum descending speed, maximum acceleration, maximum ascending acceleration, and maximum descending acceleration) of a default model that is preset in Step S108 described later (Step S105).

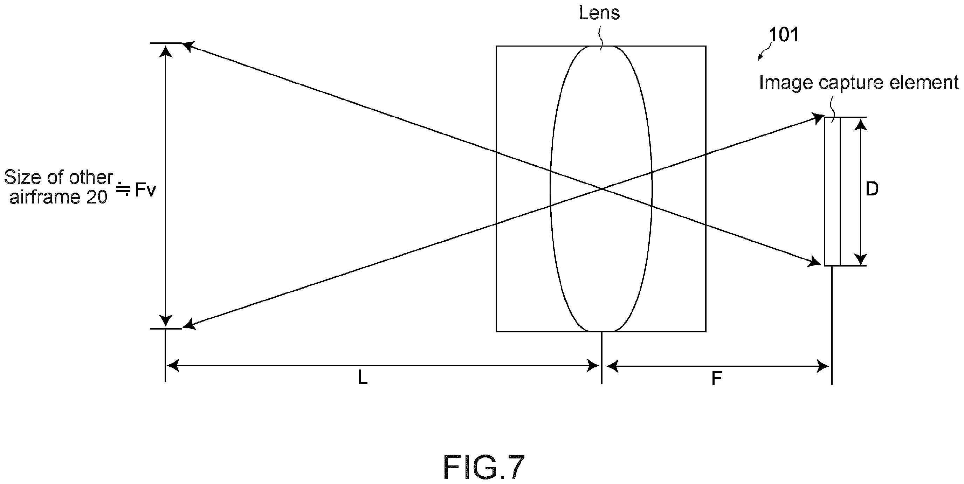

Fig. 7 is a schematic diagram schematically showing the optical system of the camera 101 and the image capture element. The relative position calculation unit 3021 calculates an estimated distance L between the other airframe 20 and the drone frame 10 by, for example, the following equation (1), in a case where the field of view size (photographing range) of the camera 101 when the other airframe 20 is enlarged to a full screen of the camera 101 is denoted as Fv, a focal length of the lens of the camera 101 is denoted as F, and a size of the image capture element of the camera 101 is denoted as D (Step S106).

$$L = (F \cdot F_V)/D \quad \ldots \quad (1)$$

The estimated distance L corresponds to a work distance (working distance), which is a distance from a tip of the lens to the other airframe 20 when the lens is in focus on the other airframe 20, as shown in Fig. 7.

Subsequently, the relative-position calculation unit 3021 calculates a three-dimensional coordinate position $(x_1, y_1, z_1)$ of the drone frame 10 with respect to a world coordinate system based on the sensor data acquired from the GPS sensor 102 and the atmospheric pressure sensor 103. The three-dimensional coordinate position is a coordinate position indicating the current position (position information) of the drone airframe 10.

Next, the camera control unit 105 outputs to the relative-position calculation unit 3021 a control signal indicating how much degrees of a pan angle $\theta_P$ (rotation angle in pan direction) and a tilt angle $\theta_t$ (rotation angle in tilt direction) of the camera 101 (gimbal) are controlled when the other airframe 20 falls within the photographing range of the camera 101. The relative position calculation unit 3021 calculates a relative direction of the other airframe 20 with respect to the drone airframe 10 based on the control signal acquired from the camera control unit 105.

Subsequently, the relative position calculation unit 3021 calculates a three-dimensional coordinate position $(x_2, y_2, z_2)$ of the other airframe 20 based on the world coordinate system from the current three-dimensional coordinate position $(x_1, y_1, z_1)$ of the drone airframe 10, the estimated distance L between the drone airframe 10 and the other airframe 20, and the relative direction (pan angle $\theta_P$ and tilt angle $\theta_t$) of the other airframe 20 with respect to the drone airframe 10 (Step S107).

Specifically, when the pan angle, the tilt angle, and the estimated distance between the drone airframe 10 and the other airframe 20 are $\theta_P$, $\theta_t$ and L, respectively, in a coordinate system in which the current position of the drone airframe 10 is an origin position, the relative position calculation unit 3021 calculates a three-dimensional coordinate position $(x_2', y_2', z_2')$ of the other airframe 20 in the coordinate system by the following equations (2), (3), and (4), for example.

$$x_2' = L*\cos(\theta_P)*\cos(\theta_t) \quad \ldots \quad (2)$$

$$y_2' = L*\sin(\theta_P)*\cos(\theta_t) \quad \ldots \quad (3)$$

$$z_2' = L*\sin(\theta_t) \quad \ldots \quad (4)$$

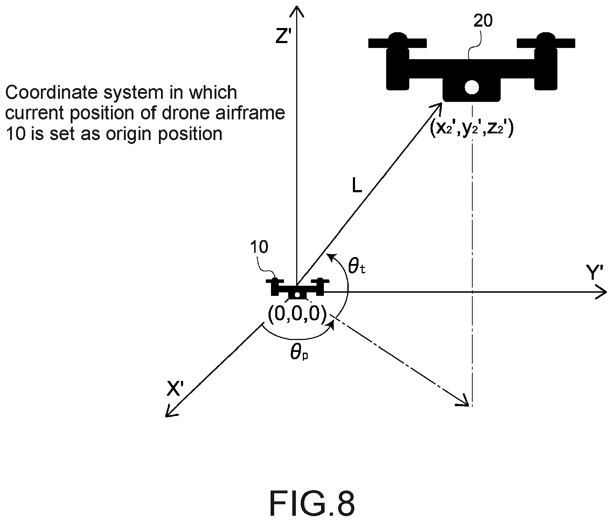

The relative position calculation unit 3021 calculates the three-dimensional coordinate position $(x_2, y_2, z_2)$ by coordinate converting the three-dimensional coordinate position $(x_2', y_2', z_2')$ into the world coordinate system using the current position $(x_1, y_1, z_1)$ of the drone airframe 10. The three-dimensional coordinate position is a coordinate position indicating the current position (position information) of the other airframe 20. Fig. 8 is a diagram showing the drone airframe 10 and the other airframe 20 together in the coordinate system in which the current position of the drone airframe 10 is set as the origin position.

Next, the relative position calculation unit 3021 reads the airframe performance (maximum speed, maximum ascending speed, maximum descending speed, maximum acceleration, maximum ascending acceleration, and maximum descending acceleration) of the other airframe 20 associated with the model name or the model number specified in the previous Step S104 and the certain period of time $t_1$ from the storage unit 303 by referring to the data table (Fig. 4) stored in the storage unit 303.

Then, the relative position calculation unit 3021 calculates a maximum moving range E1 in the horizontal direction (XY plane direction) when the three-dimensional coordinate position $(x_2, y_2, z_2)$ of the other airframe 20 calculated in the previous Step S107 is taken as a center and it is accelerated at the maximum acceleration as an upper limit from the center.

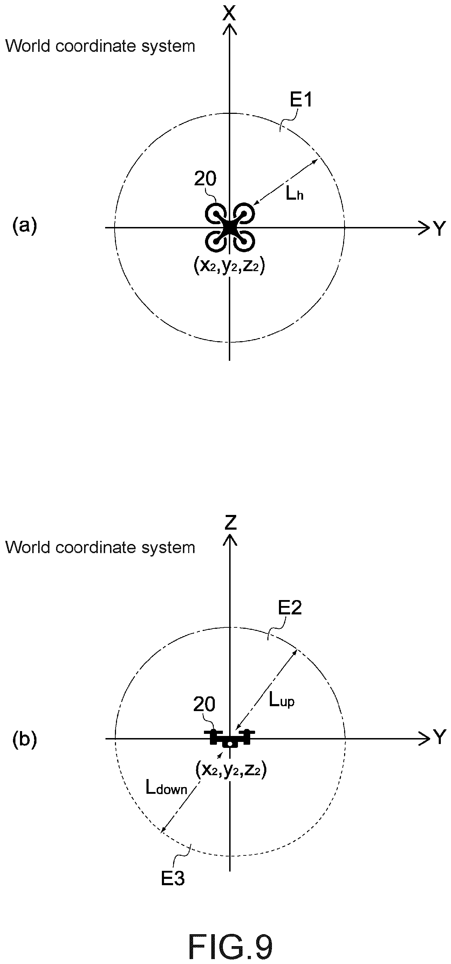

Fig. 9a is a conceptual diagram showing a maximum moving range E1 in the horizontal direction of the other airframe 20. The maximum moving range E1 is calculated, for example, by the following equations (5) and (6) when the maximum speed, the maximum acceleration, and the maximum moving distance are $V_h$, $a_h$, and $L_h$, respectively.

$$L_h = V_h t_1 + (a_h t_1^2)/2 \ \ldots \ (5)$$

$$E1 = (L_h)^2 \pi \ \ldots \ (6)$$

Next, the relative position calculation unit 3021 calculates a maximum ascending range E2 in the vertical plane direction (XY plane direction) when the three-dimensional coordinate position $(x_2, y_2, z_2)$ of the other airframe 20 calculated in the previous Step S107 is taken as the center and it is ascended at the maximum ascending acceleration as the upper limit from the center.

Fig. 9b is a conceptual diagram showing a maximum moving range in the vertical plane direction of the other airframe 20. The maximum ascending range E2 is calculated, for example, by the following equations (7) and (8) when the maximum ascending speed, the maximum ascending acceleration, and the maximum ascending distance are $V_{up}$, $a_{up}$, $L_{up}$, respectively.

$$L_{up} = V_{up} t_1 + (a_{up} t_1^2)/2 \ \ldots \ (7)$$

$$E2 = \{(L_{up})^2 \pi\}/2 \ \ldots \ (8)$$

Similarly, the relative position calculation unit 3021 a maximum descending range E3 in the vertical plane direction when the three-dimensional coordinate position $(x_2, y_2, z_2)$ of the other airframe 20 is taken as the center and it is descended at the maximum descending acceleration as the upper limit from the center.

The maximum descending range E3 is calculated, for example, by the following equations (9) and (10) when the maximum descending velocity, the maximum descending acceleration, and the maximum descending distance are $V_{down}$, $a_{down}$, $L_{down}$, respectively. The relative position calculation unit 3021 outputs calculation results of calculating the maximum movement range E1, the maximum ascending range E2, and the maximum descending range E3 to the movable area calculation unit 3022.

$$L_{down} = V_{down} t_1 + (a_{down} t_1^2)/2 \ \ldots \ (9)$$

$$E3 = \{(L_{down})^2 \pi\}/2 \ \ldots \ (10)$$

The movable area calculation unit 3022 combines the maximum moving range E1, the maximum ascending range E2, and the maximum descending range E3, calculates the maximum movable area E defined by these, and calculates the maximum movable area E of the other airframe 20 in the three-dimensional space (Step S108).

The movable area calculation unit 3022 outputs the calculation result of calculating the maximum movable area E to the moving route generation unit 1061 and the controller 40 (Step S109).

The display unit 41 of the controller 40 displays the maximum movable area E of the other airframe 20. At this time, the display unit 41 generates an overlay image in which the maximum movable area E is virtually superimposed on the picture photographed by the camera 101, and displays the image. As a result, the user can confirm the maximum movable area E of the other airframe 20 as visualized information.

The maximum movable area E may be defined as a cylinder calculated by the following equation (11), for example, when the maximum moving distance, the maximum ascending distance, and the maximum descending distance are $L_h$, $L_{up}$, $L_{down}$, respectively.

$$E = \{L_{up} + L_{down}\} \cdot (L_h)^2 \cdot \pi \ \ldots \ (11)$$

Alternatively, as shown in Fig. 1, the maximum movable area E may be defined as an ellipsoid sphere calculated by the following equation (12), for example.

$$E = 4/3 \cdot \pi \cdot [(L_h)^2 \cdot \{(L_{up} + L_{down})/2\} \ \ldots \ (12)$$

Fig. 10 is a diagram showing a situation in which the drone airframe 10 flies so as not to cross the maximum movable area E of the other airframe 20. The moving route generation unit 1061 sets the waypoint P (halfway target point) so as not to be included in a virtual obstacle and generates the moving route R via the waypoint P using the maximum movable area E of the other airframe 20 as the virtual obstacle (Step S110). At this time, the moving route generation unit 1061 generates the moving route R according to a pass search algorithm such as A* (A star) or D* (D star), for example.

Specifically, for example, the moving route generation unit 1061 calculates a three-dimensional coordinate position $(x_p, y_p, z_p)$ of the waypoint P based on a three-dimensional coordinate position of each point of point cloud data configuring the maximum movable area E and an airframe width L2 of the drone airframe 10, and generates the moving route R through the coordinate position.

At this time, the moving route generation unit 1061 sets the coordinate position $(x_p, y_p, z_p)$ so that, for example, when the moving route R passes through the center of the drone airframe 10 in the width direction, the distance L3 between the coordinate position $(x_a, y_a, z_a)$ of the arbitrary point $P_a$ of the point cloud data forming an outermost periphery of the maximum movable area E and the coordinate position $(x_p, y_p, z_p)$ becomes larger than the airframe width L2. Incidentally, the airframe width L2 is, for example, a dimension from the center in the width direction of the drone airframe 10 to the end in the width direction.

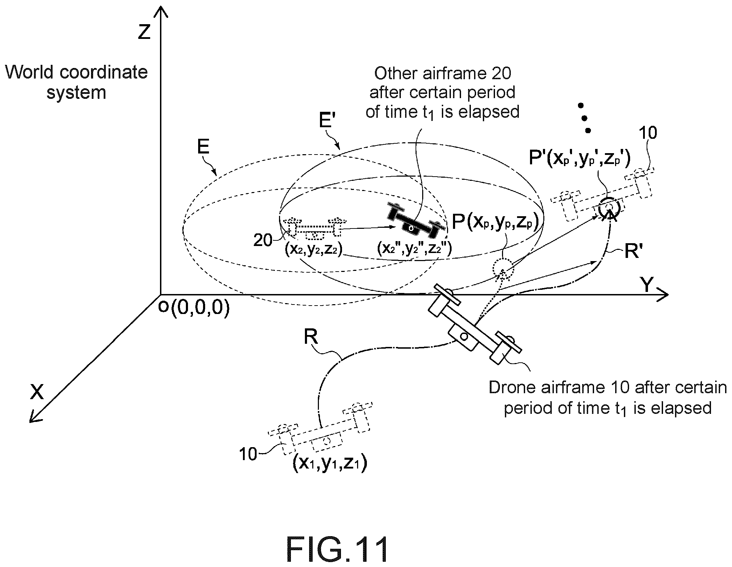

Fig. 11 is a diagram showing the drone airframe 10 and the other airframe 20 together in the world coordinate system, and is a diagram showing a situation in which the waypoint P and the moving route R are changed from a new maximum movable area E'.

When the drone airframe 10 cannot reach the waypoint P within the certain period of time $t_1$ due to some external factors such as strong wind, for example, the moveable area calculation unit 3022 newly calculates the maximum moveable area E' that can be taken within the certain period of time $t_1$ of the other airframe 20 from a current position $(x_2'', y_2'', z_2'')$ of the other airframe 20 after the certain period of time $t_1$ is elapsed. Then, the moving route generation unit 1061 may change the waypoint P based on the maximum movable area E'.

In this case, the moving route generation unit 1061 changes the moving route from a current flight position of the drone airframe 10 to the waypoint P to a moving route R' through a coordinate position $(x_p', y_p', z_p')$ of a changed waypoint P'. Thus, even if an unexpected accident occurs such that the drone airframe 10 cannot reach the waypoint P within the certain predetermined time $t_1$, it is possible to avoid a collision with the other airframe 20.

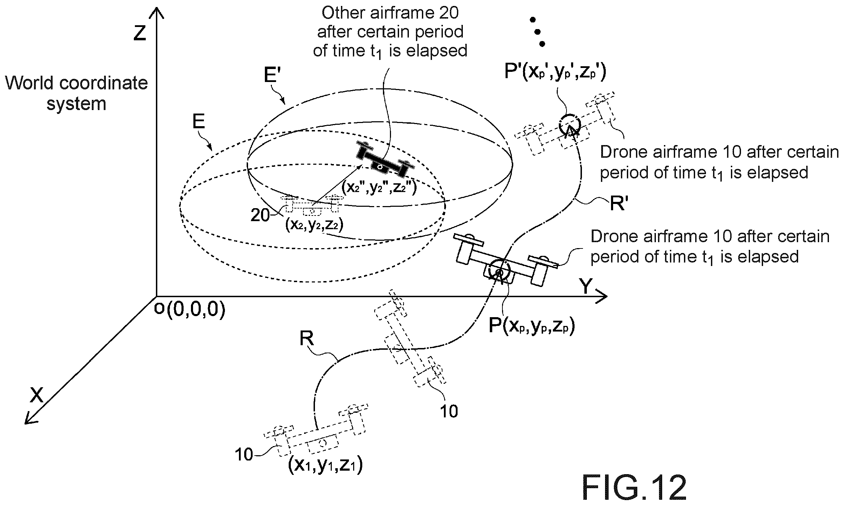

Fig. 12 is a diagram showing the drone airframe 10 and the other airframe 20 together in the world coordinate system, and is a diagram showing a situation in which the moving route R' is generated from the new maximum movable area E'.

The information processing system 1 repeatedly executes a series of steps from the previous Step S102 to Step S110 at the certain period of time $t_1$. Thus, the waypoint P through which the drone airframe 10 passes is intermittently set at every certain period of time $t_1$.

At this time, as shown in Fig. 12, the movable area calculation unit 3022 newly calculates the maximum movable area E' that can be taken within the certain period of time $t_1$ of the other airframe 20 from the current position $(x_2'', y_2'', z_2'')$ of the other airframe 20 after the certain period of time $t_1$ is elapsed.

The moving route generation unit 1061 sets a new waypoint P' based on the maximum movable area E', and newly generates the moving route R' through the coordinate position $(x_p', y_p', z_p')$ of the waypoint P'.

Furthermore, when the drone airframe 10 cannot reach from the waypoint P to the waypoint P' within the certain period of time $t_1$, the moveable area calculation unit 3022 may newly calculate the maximum moveable area E' that can be taken within the certain period of time $t_1$ of the other airframe 20 from the current position of the other airframe 20 after the certain period of time $t_1$ is elapsed, and the moving route generation unit 1061 may change the waypoint P' based on the maximum moveable area E'.

In this case, the moving route generation unit 1061 changes the moving route from a current own flight position to the waypoint P' to the moving route R' through the three-dimensional coordinate position of the waypoint after the change.

[Actions and effects]

In the information processing system 1, the information processing apparatus 30 calculates the maximum movable area E that is a range in which the other airframe 20 can move to the maximum within the certain period of time $t_1$. Then, the drone airframe 10 generates the moving route R that does not cross the maximum movable area E.

Thus, even if the other airframe 20 performs unexpected operations such as sudden ascending and sudden descending within the certain period of time $t_1$, the operations are within the maximum movable area E. Therefore, if the drone airframe 10 moves in accordance with the moving route R that does not cross the maximum movable area E, collision with the other airframe 20 within the certain period of time $t_1$ can be reliably avoided.

Furthermore, in the information processing system 1, the information processing apparatus 30 newly calculates the maximum movable area E' based on the current position of the other airframe 20 after the certain period of time $t_1$ is elapsed since the moving route R was generated. Then, the drone airframe 10 newly generates the moving route R' that does not cross the maximum movable area E'. This avoids collision between the drone airframe 10 and the other airframe 20 no matter what moving route the other airframe 20 takes.

Furthermore, in the information processing system 1, the information processing apparatus 30 executes arithmetic processing for calculating the maximum movable area E of the drone airframe 10. That is, in order to avoid a collision between the drone airframe 10 and the other airframe 20, the information processing apparatus 30 is responsible for a part of the arithmetic processing to be executed by the drone airframe 10. Thus, a computational load of the drone airframe 10 can be greatly reduced. Furthermore, since it is not necessary to increase the calculation processing capacity of the drone airframe 10, a design cost of the drone airframe 10 is suppressed.

<Second embodiment>

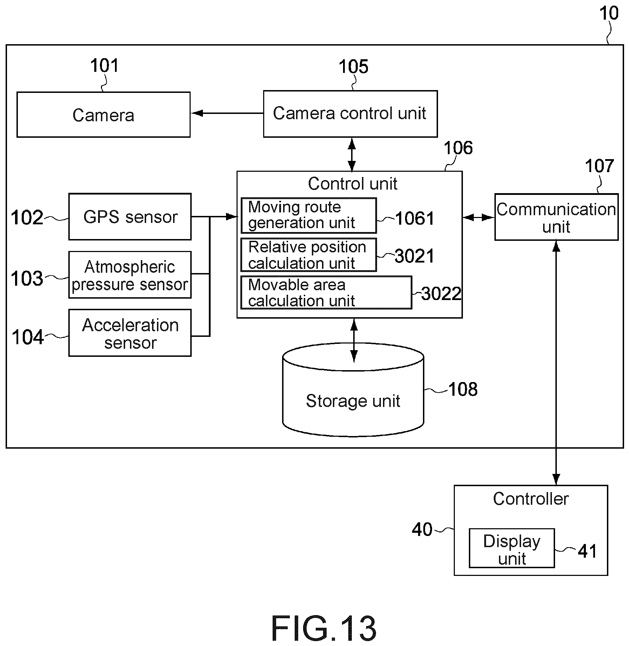

Fig. 13 is a block diagram showing a configuration example of the drone airframe 10 according to a second embodiment of the present technology. Hereinafter, the same components as those of the first embodiment are denoted by the same reference numerals, and a description thereof will be omitted.
The second embodiment is different from the first embodiment in that the drone airframe 10 calculates the maximum movable area of the other airframe 20 when an arithmetic processing capability of the drone airframe 10 itself is improved or when the drone airframe 10 cannot communicate with the information processing apparatus 30, and consistently performs processing for generating its own moving route that does not cross the maximum movable area.

[Configuration of drone aircraft]

The control unit 106 of the drone airframe 10 according to the second embodiment functionally includes the moving route generation unit 1061, the relative position calculation unit 3021, and the movable area calculation unit 3022, as shown in Fig. 13.

[Movement of drone airframe]

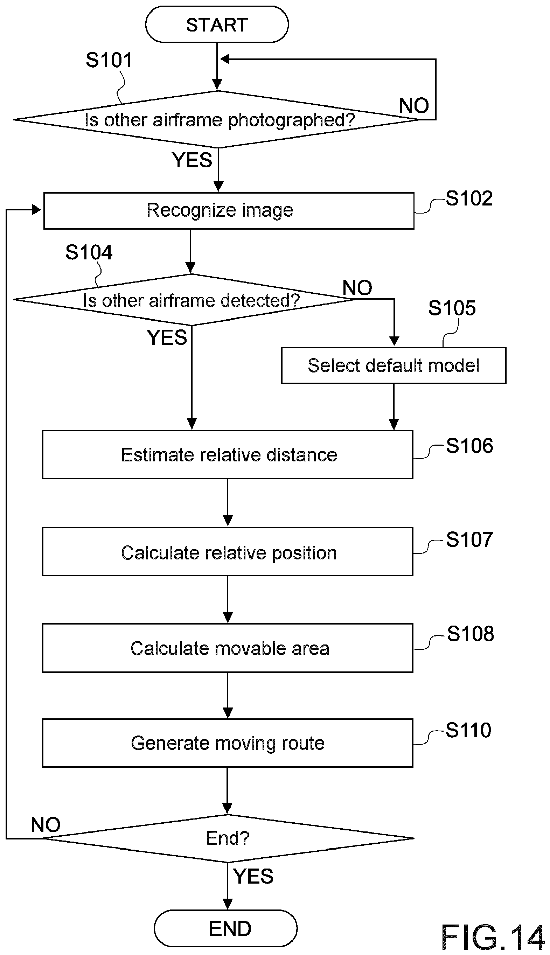

Fig. 14 is a flowchart showing a typical operation of the drone airframe 10 of the second embodiment. The drone airframe 10 executes operations according to a flowchart shown in Fig. 14. The same operations as that of the information processing system 1 of the first embodiment are denoted by the same reference numerals, and a description thereof is omitted.

<Modifications>

Although the embodiments of the present technology have been described above, the present technology is not limited to the embodiments described above, and it should be appreciated that various modifications may be made thereto.
For example, in the above-described embodiments, the moving route R of the drone airframe 10 is generated based on the maximum movable area E calculated from the current position and the airframe performance of the other airframe 20, but it is not limited thereto, and the moving route of the drone airframe 10 may be generated based on the maximum movable area of the other airframe 20 calculated in advance for each model name or model number of the other airframe 20.
In the above embodiments, the overlay image is displayed on the display unit 41, but it is not limited thereto, and instead of or in addition to the overlay image, information for prompting the user to draw attention may be displayed on the display unit 41.
Furthermore, in the above embodiments, the model name or the model number of the other airframe 20 is specified from the 3D shape of the other airframe 20, but it is not limited thereto, and for example, the model name or the model number of the other airframe 20 may be specified from a logo, a marker, or the like on the surface of the other airframe 20.
In addition, in the above embodiments, using all of the maximum speed, the maximum ascending speed, the maximum descending speed, the maximum acceleration, the maximum ascending acceleration, and the maximum descending acceleration of the other airframe 20, the maximum moving range E1, the maximum ascending range E2, and the maximum descent range E3 are calculated, but it is not limited thereto, at least one of the maximum speed, the maximum ascending speed, the maximum descending speed, the maximum acceleration, the maximum ascending acceleration, or the maximum descending acceleration may be used for calculating the maximum moving range E1, the maximum ascending range E2, or the maximum descent range E3.

Furthermore, in the above embodiments, the information processing apparatus 30 calculates the maximum movable area of the other airframe 20, and generates its own moving route in which the drone airframe 10 does not cross the maximum movable area, but it is not limited thereto. Instead of or in addition to the largest movable area of the other airframe 20, the drone airframe 10 may generate its own moving route based on the movable area that can be taken within the certain period of time $t_1$ of the other airframe 20.

<Others>

The embodiments of the present technology may include, for example, the information processing apparatus, the system, the information processing method executed by the information processing apparatus or the system, the program for operating the information processing apparatus, and a non-transitory tangible medium in which the program is recorded, as described above.

In the above embodiments, the description is made on the assumption that the drone airframe 10 and the other airframe 20 are flight bodies, but it is not limited thereto, and at least one of the drone airframe 10 or the other airframe 20 may be the flight body. Furthermore, the present technology may be applied to other moving body other than the flight body, for example, a robot, and the application thereof is not particularly limited. In addition to the drone airframe, an aircraft, an unmanned aerial vehicle, and an unmanned helicopter are included in the flight body.

In addition, the effects described herein are descriptive or exemplary only and not restrictive. In other words, the present technology may have other effects apparent to those skilled in the art from the description herein in addition to the above effects or instead of the above effects.

The desirable embodiments of the present technology are described above in detail with reference to the accompanying drawings. However, the present technology is not limited to these examples. It is clear that persons who have common knowledge in the technical field of the present technology could conceive various alterations or modifications within the scope of a technical idea according to the embodiments of the present technology. It is appreciated that such alterations or modifications also fall under the technical scope of the present technology.

The present technology may also have the following structures.

(1) An information processing apparatus, including:
a control unit that calculates a relative position of a second moving body with respect to a first moving body based on a captured image of the second moving body captured by the first moving body and position information of the first moving body, and calculates a movable area of the second moving body based on the relative position.
(2) The information processing apparatus according to (1), in which
the control unit specifies identification information for identifying the second moving body by performing image processing on the captured image.
(3) The information processing apparatus according to (2), in which
the control unit estimates a distance between the second moving body and the first moving body, and calculates position information of the second moving body from the estimated distance, the position information of the first moving body, and a relative direction of the second moving body with respect to the first moving body.
(4) The information processing apparatus according to (3), in which
the control unit calculates a movable area of the second moving body based on the position information of the second moving body and an airframe performance of the second moving body associated with the identification information.
(5) The information processing apparatus according to (3) or (4), in which
the control unit calculates the movable area of the second moving body based on at least one of a maximum speed, a maximum ascending speed, a maximum descending speed, a maximum acceleration, maximum ascending acceleration, or maximum descending acceleration of the second moving body associated with the identification information, and the position information of the second moving body.
(6) The information processing apparatus according to (5), in which

the control unit outputs a calculation result of the movable area to the first moving body, and
the first moving body generates a moving route of the first moving body that does not cross the movable area.

(7) The information processing apparatus according to (5) or (6), in which
the control unit newly calculates the movable area of the second moving body based on the position information of the second moving body after a certain period of time is elapsed from the generation of the moving route of the first moving body.
(8) The information processing apparatus according to (7), in which

the control unit outputs a calculation result obtained by newly calculating the movable area of the second moving body to the first moving body, and
the first moving body newly generates a moving route of the first moving body that does not cross the newly calculated movable area.

(9) The information processing apparatus according to any one of (1) to (8), in which
at least one of the first moving body or the second moving body is a flight body.
(10) The information processing apparatus according to any one of (1) to (9), which is a server.
(11) An information processing apparatus that calculates a relative position of a moving body with respect to the information processing apparatus based on a captured image of the moving body captured by the information processing apparatus and position information of the information processing apparatus, and calculates a movable area of the moving body based on the relative position.
(12) The information processing apparatus according to (11), which is a moving body or a flight body.
(13) An information processing method by an information processing apparatus, including:

calculating a relative position of a second moving body with respect to a first moving body based on a captured image of the second moving body captured by the first moving body and position information of the first moving body; and
calculating a movable area of the second moving body based on the relative position.

(14) A program that causes an information processing apparatus to execute steps of:

calculating a relative position of a second moving body with respect to a first moving body based on a captured image of the second moving body captured by the first moving body and position information of the first moving body; and
calculating a movable area of the second moving body based on the relative position.

(15) An information processing system, including:

an information processing apparatus that calculates a relative position of a second moving body with respect to a first moving body based on a captured image of the second moving body captured by the first moving body and position information of the first moving body, calculates a movable area of the second moving body based on the relative position, and outputs a calculation result of the movable area to the first moving body; and
the first moving body generates a moving route of the first moving body that does not cross the movable area.

Reference Signs List

| | |
|---|---|
| 1 | information processing system |
| 10 | drone airframe |
| 20 | other airframe |
| 50 | removable recording medium |
| 60 | controller |
| 106, 302 | control unit |
| E, E' | maximum movable area |
| R, R' | moving route |

**Claims**

1. An information processing apparatus, comprising:
a control unit that calculates a relative position of a second moving body with respect to a first moving body based on a captured image of the second moving body captured by the first moving body and position information of the first moving body, and calculates a movable area of the second moving body based on the relative position.

2. The information processing apparatus according to claim 1, wherein
the control unit specifies identification information for identifying the second moving body by performing image processing on the captured image.

3. The information processing apparatus according to claim 2, wherein
the control unit estimates a distance between the second moving body and the first moving body, and calculates position information of the second moving body from the estimated distance, the position information of the first moving body, and a relative direction of the second moving body with respect to the first moving body.

4. The information processing apparatus according to claim 3, wherein
the control unit calculates a movable area of the second moving body based on the position information of the second moving body and an airframe performance of the second moving body associated with the identification information.

5. The information processing apparatus according to claim 4, wherein
the control unit calculates the movable area of the second moving body based on at least one of a maximum speed, a maximum ascending speed, a maximum descending speed, a maximum acceleration, maximum ascending acceleration, or maximum descending acceleration of the second moving body associated with the identification information, and the position information of the second moving body.

6. The information processing apparatus according to claim 5, wherein

the control unit outputs a calculation result of the movable area to the first moving body, and
the first moving body generates a moving route of the first moving body that does not cross the movable area.

7. The information processing apparatus according to claim 5, wherein
the control unit newly calculates the movable area of the second moving body based on the position information of the second moving body after a certain period of time is elapsed from the generation of the moving route of the first moving body.

8. The information processing apparatus according to claim 7, wherein

the control unit outputs a calculation result obtained by newly calculating the movable area of the second moving body to the first moving body, and
the first moving body newly generates a moving route of the first moving body that does not cross the newly calculated movable area.

9. The information processing apparatus according to claim 1, wherein
at least one of the first moving body or the second moving body is a flight body.

10. The information processing apparatus according to claim 1, which is a server.

11. An information processing apparatus that calculates a relative position of a moving body with respect to the information processing apparatus based on a captured image of the moving body captured by the information processing apparatus and position information of the information processing apparatus, and calculates a movable area of the moving body based on the relative position.

12. The information processing apparatus according to claim 11, which is a moving body or a flight body.

13. An information processing method by an information processing apparatus, comprising:

calculating a relative position of a second moving body with respect to a first moving body based on a captured image of the second moving body captured by the first moving body and position information of the first moving body; and
calculating a movable area of the second moving body based on the relative position.

14. A program that causes an information processing apparatus to execute steps of:

calculating a relative position of a second moving body with respect to a first moving body based on a captured image of the second moving body captured by the first moving body and position information of the first moving body; and
calculating a movable area of the second moving body based on the relative position.

15. An information processing system, comprising:

an information processing apparatus that calculates a relative position of a second moving body with respect to a first moving body based on a captured image of the second moving body captured by the first moving body and position information of the first moving body, calculates a movable area of the second moving body based on the relative position, and outputs a calculation result of the movable area to the first moving body; and
the first moving body generates a moving route of the first moving body that does not cross the movable area.

FIG.1

FIG.2

1

302                                          30
303                                          301

Control unit

Storage unit  ⟷  Relative position
                  calculation unit  ~3021

              Movable area
              calculation unit  ~3022  ⟷  Communication
                                            unit

101              105                          10

Camera  ⟵  Camera control unit

                  106                          107

              Control unit
102~  GPS sensor  ⟶  Moving route
                      generation unit  ~1061  ⟷  Communication
                                                    unit
103~  Atmospheric
      pressure sensor

104~  Acceleration sensor          Storage unit  ~108

                                            Controller

40~                                    Display unit  ~41

FIG.3

| Model number | Maximum speed | Maximum ascending speed | Maximum descending speed | Maximum acceleration | Maximum ascending acceleration | Maximum descending acceleration |
|---|---|---|---|---|---|---|
| default | 60km/h | 6m/s | 4m/s | 6m/s$^2$ | 2m/s$^2$ | 1.5m/s$^2$ |
| RX100 | 40km/h | 5m/s | 3m/s | 3m/s$^2$ | 1.5m/s$^2$ | 1m/s$^2$ |
| DR600 | 60km/h | 6m/s | 4m/s | 6m/s$^2$ | 2m/s$^2$ | 1.5m/s$^2$ |
| HX1000 | 50km/h | 6m/s | 4m/s | 5m/s$^2$ | 1.7m/s$^2$ | 1m/s$^2$ |
| ⋮ | | | | | | |

FIG.4

EP 3 995 396 A1

**FIG.5**

START

S101

Is other airframe photographed? — NO

YES

Processing of drone airframe 10

Recognize image — S102

Transmit information to server — S103

Processing of information processing apparatus 30

Is other airframe detected? — NO

S104    YES

S105

Select default model

Estimate relative distance — S106

Calculate relative position — S107

Calculate movable area — S108

Transmit spatial coordinate of movable area to drone airframe 10 — S109

Processing of drone airframe 10

Generate moving route — S110

NO

End?

YES

END

FIG.6

Lens

101

Image capture element

Size of other airframe 20 ≒ Fv

D

L

F

FIG.7

EP 3 995 396 A1

Coordinate system in which current position of drone airframe 10 is set as origin position

FIG.8

X

World coordinate system

E1

20

$L_h$

(a)

Y

$(x_2, y_2, z_2)$

Z

World coordinate system

E2

20

$L_{up}$

(b)

Y

$(x_2, y_2, z_2)$

$L_{down}$

E3

# FIG.9

FIG.10

FIG.11

World coordinate system

Other airframe 20 after certain period of time $t_1$ is elapsed

$P'(x_p', y_p', z_p')$

Drone airframe 10 after certain period of time $t_1$ is elapsed

Drone airframe 10 after certain period of time $t_1$ is elapsed

$(x_2'', y_2'', z_2'')$

$20$ $(x_2, y_2, z_2)$

$o(0,0,0)$

$P(x_p, y_p, z_p)$

$R$

$10$

$10$ $(x_1, y_1, z_1)$

FIG.12

EP 3 995 396 A1

10

101                    105

Camera  ←  Camera control unit

106

Control unit

102  GPS sensor

Moving route
generation unit  ~1061

103  Atmospheric
pressure sensor

Relative position
calculation unit  ~3021

104  Acceleration
sensor

Movable area
calculation unit  ~3022

107

Communication
unit

Storage unit  ~108

Controller

40  Display
unit  ~41

FIG.13

START

S101

Is other airframe photographed? — NO

YES

Recognize image — S102

S104

Is other airframe detected? — NO

YES

S105

Select default model

Estimate relative distance — S106

Calculate relative position — S107

Calculate movable area — S108

Generate moving route — S110

NO — End?

YES

END

FIG.14

**INTERNATIONAL SEARCH REPORT**

International application No.

PCT/JP2020/018552

A.  CLASSIFICATION OF SUBJECT MATTER
Int. Cl. B64C39/02(2006.01)i, B64D47/08(2006.01)i, G08G5/04(2006.01)i
FI: G08G5/04, B64C39/02, B64D47/08

According to International Patent Classification (IPC) or to both national classification and IPC

B.  FIELDS SEARCHED

Minimum documentation searched (classification system followed by classification symbols)
Int. Cl. B64C39/02, B64D47/08, G08G5/04

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2017-539033 A (AMAZON TECHNOLOGIES, INC.) 28 December 2017, paragraphs [0006], [0007], [0009]-[0015], [0022], [0029], [0031]-[0037], [0041], [0045], [0065]-[0077], fig. 8 | 1-15 |
| Y | JP 2000-214254 A (MITSUBISHI ELECTRIC CORP.) 04 August 2000, paragraphs [0010]-[0012], [0019] | 1-15 |
| Y | WO 2019/077682 A1 (AUTONOMOUS CONTROL SYSTEMS LABORATORY LTD.) 25 April 2019, paragraphs [0014], [0029], fig. 4 | 10 |

☐  Further documents are listed in the continuation of Box C.      ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search  09.07.2020 | Date of mailing of the international search report  21.07.2020 |
| Name and mailing address of the ISA/    Japan Patent Office    3-4-3, Kasumigaseki, Chiyoda-ku,    Tokyo 100-8915, Japan | Authorized officer    Telephone No. |

Form PCT/ISA/210 (second sheet) (January 2015)

INTERNATIONAL SEARCH REPORT

Information on patent family members

International application No.

PCT/JP2020/018552

| Patent Documents referred to in the Report | Publication Date | Patent Family | Publication Date |
|---|---|---|---|
| JP 2017-539033 A | 28.12.2017 | WO 2016/094849 A1 paragraphs [0017], [0018], [0020]- [0026], [0033], [0040], [0042]- [0048], [0052], [0056], [0076]- [0088], fig. 8 US 2016/0171896 A1 EP 3230972 A CN 107111958 A | |
| JP 2000-214254 A | 04.08.2000 | (Family: none) | |
| WO 2019/077682 A1 | 25.04.2019 | (Family: none) | |

Form PCT/ISA/210 (patent family annex) (January 2015)

**EP 3 995 396 A1**

**REFERENCES CITED IN THE DESCRIPTION**

**Patent documents cited in the description**

- JP 2012131484 A
- JP 2007034714 A